# FASCICULE DE BREVET EUROPEEN

(11) **EP 3 278 409 B1**
(45) Date de publication et mention de la délivrance du brevet: **01.05.2024**
(21) Numéro de dépôt: 16717107.3
(22) Date de dépôt: 30.03.2016
(51) Int. Cl.: H01S 3/10, G01N 15/14

(54) **PROCEDE ET DISPOSITIF DE DECLENCHEMENT DE SOURCES LUMINEUSES IMPULSIONNELLES**
VERFAHREN UND VORRICHTUNG ZUR ANSTEUERUNG VON GEPULSTEN LICHTQUELLEN
METHOD AND DEVICE FOR TRIGGERING PULSED LIGHT SOURCES

(30) Priorité: 30.03.2015 FR 1552661
(43) Date de publication de la demande: 07.02.2018
(73) Titulaire: Horiba ABX SAS, 34184 Montpellier (FR); Université de Limoges, 87032 Limoges Cedex 1 (FR); Centre National de la Recherche Scientifique, 75016 Paris (FR)
(72) Inventeur: COUDERC, Vincent, 87430 Verneuil sur Vienne (FR); GRANDO, Roland, 34980 Saint Gely du Fesc (FR); LABRUYERE, Alexis, 87100 Limoges (FR); RONGEAT, Nelly, 34790 Grabels (FR); SUBTIRELU, Denisa, 34080 Montpellier (FR)
(74) Mandataire: IPAZ
(86) Numéro de dépôt international: PCT/EP2016/056957
(87) Numéro de publication internationale: WO 2016/156429

(56) Documents cités:
- EP-A2- 0 435 166
- EP-A2- 1 696 522
- FR-A1- 2 970 334
- GB-A- 2 497 549
- US-A- 6 038 240
- US-A1- 2011 019 513
- US-A1- 2014 218 791

## Description

### Domaine technique

La présente invention concerne un procédé et un dispositif de déclenchement de sources lumineuses impulsionnelles, et notamment leurs applications dans le domaine de la cytométrie en flux.

La présente invention se situe dans le domaine des dispositifs de déclenchement des sources lumineuses impulsionnelles, et plus particulièrement le domaine de l'instrumentation associée à la cytométrie en flux.

### Etat de la technique antérieure

Les sources lasers impulsionnelles déclenchées par voies passive et/ou actives montrent une incertitude sur le temps d'arrivée de l'impulsion délivrée. Il existe d'une part une variabilité de la fréquence de l'impulsion lumineuse de la source lors d'un fonctionnement récurrent (fréquence de déclenchement fixe) ainsi que, d'autre part, une variabilité de l'instant de l'émission lumineuse par rapport à la commande du déclenchement de la source lumineuse par un élément externe (fréquence de déclenchement aléatoire).

On connaît les sources lasers à déclenchement actif (par exemple la source cohérente « HELIOS ») qui délivrent des impulsions subnanosecondes avec une variation temporelle par rapport à la commande inférieure à 5 ns. Malheureusement, l'amplitude de l'impulsion engendrée par ce genre de source fluctue fortement avec la fréquence de récurrence ce qui est fortement handicapant pour des applications dans le domaine des conversions de fréquences (génération de continuum, doublage, triplage de fréquence). Dans le domaine de la cytométrie en flux, la variabilité de l'amplitude laser impacte l'amplitude du signal optique caractéristique de l'élément à analyser, et diminue ainsi la précision de la mesure.

Les sources lasers à déclenchement passif peuvent être commandées par le contrôle temporel de leur onde de pompe. L'activation de celle-ci permet alors d'obtenir une impulsion laser en sortie avec un retard qui fluctue en fonction de la fréquence de récurrence de la commande. On parle alors de variation du temps de création de l'impulsion (« *Puise Creation Delay* » (PCD)) et de gigue temporelle.

On connaît notamment les documents US2008/0247425 et FR2947108 qui décrivent des micro-lasers déclenchés passivement et qui présentent une variation du retard temporel trop importante pour des impulsions à 10⁻⁹ secondes. Le document US2014218791 décrit un procédé de commande d'un laser pulsé dans lequel la période de déclenchement est mesurée et le signal de commande (durée et intensité) est adapté en fonction de la période de déclenchement. Le document US6038240 divulgue un Q-switch laser dans lequel le début de l'activation du commutateur (Q-switch) est retardé en tant que fonction prédéterminée de la période de déclenchement.

Dans de nombreuses applications scientifiques, la mise en oeuvre des sources lumineuses impulsionnelles nécessite de maîtriser la variabilité du temps de création de l'impulsion et/ou la variabilité de l'intensité des impulsions en fonction de la fréquence de déclenchement desdites sources lumineuses impulsionnelles ; et aucun des documents précédents ne répond au problème technique de la maîtrise de la variation du temps de création de l'impulsion et/ou de la maîtrise de la variation de l'amplitude des impulsions lumineuses.

La présente invention a pour objet de répondre au moins en grande partie aux problèmes précédents et de conduire en outre à d'autres avantages.

Un but de l'invention est de proposer un procédé et un dispositif électronique réduisant la variabilité temporelle de l'instant du déclenchement et la variabilité d'amplitude de l'impulsion lumineuse d'une source lumineuse impulsionnelle.

Un autre but de l'invention est de rendre plus fiable la génération d'une impulsion lumineuse.

Un autre but de l'invention est de proposer un dispositif de cytométrie en flux minimisant la probabilité de mesures de doublets de particules.

### Exposé de l'invention

On obtient au moins l'un des objectifs précités avec un procédé de déclenchement, à un instant souhaité, d'une source lumineuse impulsionnelle comprenant au moins une itération des étapes suivantes : comme définies dans la revendication 1.

On entend par source lumineuse impulsionnelle une source lumineuse non continue temporellement.

Les paramètres de contrôle de la source lumineuse comprennent de manière non limitative d'une part des paramètres associés à un signal électrique de commande (période, retard, fréquence, ...) et/ou un signal électrique de polarisation d'une source laser (tension de polarisation), et d'autre part des paramètres associés à l'impulsion lumineuse émise (fréquence d'émission, intensité, amplitude, temporisation...)

L'amélioration du déclenchement de la source lumineuse consiste notamment à minimiser la variation temporelle de l'émission de l'impulsion optique et/ou à stabiliser l'amplitude de ladite impulsion lumineuse.

D'une manière générale, les paramètres de contrôle de la source lumineuse impulsionnelle correspondent à toutes les composantes qui ont un impact sur l'émission de l'impulsion lumineuse et/ou sur la qualité et la forme de l'émission elle-même.

Ainsi, le procédé selon l'invention permet de rendre plus précis le déclenchement d'une source lumineuse impulsionnelle, en réduisant d'une part la variabilité du déclenchement, et d'autre part les caractéristiques de l'émission elle-même. En effet, en prenant en compte les différents paramètres qui perturbent l'émission de l'impulsion lumineuse de ladite source, le procédé selon l'invention permet de générer au moins un signal électrique de déclenchement qui est adapté et compensé en fonction desdits paramètres. Le signal électrique de déclenchement ainsi compensé permet de générer une impulsion lumineuse dont les propriétés intrinsèques d'émission (intensité lumineuse, instant d'émission...) sont mieux contrôlées vis-à-vis du signal de déclenchement externe et sont moins fluctuantes en fonction de l'utilisation répétée et aléatoire de ladite source.

Le procédé selon l'invention permet ainsi de rendre plus fiable l'émission d'un signal électrique de commande d'une source lumineuse impulsionnelle car il est modulé en fonction de paramètres associés au fonctionnement de ladite source. Plus particulièrement, l'amplitude de l'émission lumineuse émise par la source impulsionnelle peut ainsi être régulée en fonction d'au moins un tir précédent.

Préférentiellement, le procédé et le dispositif objets de la présente invention permettent à la fois de contrôler notamment l'instant de l'émission d'un signal électrique de commande et l'intensité d'une émission impulsionnelle optique en fonction de plusieurs utilisations antérieures dudit procédé. Plus particulièrement, le procédé et le dispositif objets de la présente invention déterminent une durée, dite écart en fonction de la durée séparant plusieurs utilisations antérieures dudit procédé et/ou dispositif.

La détermination de cet écart peut être réalisée de manière simple en calculant la moyenne arithmétique des durées séparant deux utilisations consécutives et/ou par l'intermédiaire d'une loi mathématique particulière appliquée aux durées séparant deux utilisations antérieures consécutives, en considérant plusieurs utilisations antérieures.

Le procédé et le dispositif objets de la présente invention permettent à la fois de contrôler notamment l'instant de l'émission d'un signal électrique de commande et l'intensité d'une émission impulsionnelle lumineuse en fonction de l'utilisation directement antérieure dudit procédé. Dans ce cas, la durée, dite écart, déterminée par ledit procédé est déterminée en fonction de la réception du signal de commande actuel et la réception du signal de commande précédent.

Le procédé selon l'invention peut être utilisé dans un très grand nombre d'applications scientifiques et d'instruments de mesure, dont le cytomètre en flux. Notamment, il permet d'une part d'améliorer le synchronisme de l'impulsion lumineuse mise en oeuvre dans ledit instrument de mesure avec une particule, et d'autre part il permet d'améliorer la mesure optique réalisée à l'aide d'une source lumineuse impulsionnelle en fonction de mesures physiques précédentes. Le procédé selon l'invention ne se limite pas à un domaine d'application particulier, ni même à un type particulier d'instruments ou de mesures.

Dans l'invention, l'étape de compensation d'au moins un paramètre de contrôle du procédé selon l'invention comprend au moins une itération des étapes suivantes :
- détermination, en fonction d'au moins un écart, d'une valeur de retard de déclenchement de ladite source lumineuse associée audit écart,
- détermination d'une durée de temporisation avant le déclenchement de ladite source lumineuse en fonction de ladite valeur de retard et dudit instant souhaité.

Ainsi, le procédé selon l'invention permet de réaliser un déclenchement de la source lumineuse en fonction de l'écart séparant au moins deux signaux de commande consécutifs, autrement dit en fonction de la fréquence moyenne de déclenchement de la source lumineuse. Comme expliqué précédemment, cette fréquence moyenne (ou durée moyenne entre deux utilisations consécutives) peut être déterminée en fonction de l'utilisation directement antérieure de ladite source ou obtenu en déterminant une moyenne (ou une autre loi mathématique) sur plusieurs utilisations antérieures de ladite source.

Ainsi, le procédé selon l'invention permet de tenir compte, pour une source lumineuse impulsionnelle donnée, des durées intrinsèques à cette dernière et qui varient en fonction de la fréquence de déclenchement de la source lumineuse.

Par ailleurs, il est aussi possible à l'aide de la présente invention de mieux contrôler l'intensité de l'impulsion lumineuse en paramétrant ladite source lumineuse en fonction de son utilisation antérieure.

Ainsi, le déclenchement de la source lumineuse est plus précis et plus fiable puisqu'il prend en compte et élimine à la fois les variations des durées intrinsèques à la source lumineuse et de l'amplitude de l'impulsion lumineuse lors de son déclenchement. De plus, le procédé selon l'invention réduit, voire annule, la variabilité temporelle et d'amplitude liées au déclenchement de la source lumineuse en fonction de la fréquence ou des fréquences de déclenchement de ladite source lumineuse.

Avantageusement, la valeur du retard de déclenchement peut être une valeur prédéterminée en fonction dudit écart. Une telle valeur de retard peut être déterminée lors de mesure de tests préalables, menés sur la source utilisée.

Préférentiellement, le procédé selon l'invention peut comprendre, une phase préalable lors de laquelle une ou plusieurs valeurs de retard de déclenchement peuvent être déterminées pour une plusieurs valeurs ou plages de valeurs d'écart, ou de fréquence, de déclenchement de la source lumineuses.

Les valeurs prédéterminées de retard de déclenchement peuvent en outre être mémorisées dans une base de données ou un moyen de mémorisation en association avec les valeurs, ou les plages de valeurs, relatives à l'écart de déclenchement, et/ou à la fréquence de déclenchement.

Alternativement, lors de la phase préalable, une ou plusieurs relations mathématiques reliant la valeur de retard de déclenchement à la valeur de l'écart, ou de la fréquence de déclenchement peuvent être déterminées.

Selon une autre caractéristique avantageuse, le procédé selon l'invention peut inclure une étape de lecture dans une base de données de la valeur dudit retard de déclenchement en fonction de la valeur de l'écart de déclenchement. La base de données peut être établie par étalonnage en enregistrant une table de correspondance entre un retard de déclenchement et le ou les écarts, et/ou le ou les fréquences de déclenchement de ladite source lumineuse, lesdits écarts, et/ou lesdites fréquences de déclenchement pouvant varier sur toute la gamme d'utilisation de la source lumineuse.

Selon une autre variante de l'invention, l'étape d'ajustement d'au moins un paramètre de contrôle de la source lumineuse impulsionnelle peut comprendre en outre une étape de détermination, en fonction dudit écart, d'une tension de polarisation de ladite source lumineuse impulsionnelle.

Ainsi, le procédé selon l'invention permet d'ajuster la tension de polarisation de la diode de pompe en fonction de la fréquence de déclenchement de la source lumineuse impulsionnelle, permettant ainsi de mieux contrôler l'intensité lumineuse de ladite source pour chaque déclenchement. La variabilité de l'intensité de la source lumineuse impulsionnelle liée à la fréquence de déclenchement est ainsi réduite.

Préférentiellement, la valeur de la tension de polarisation de la source lumineuse impulsionnelle peut être une valeur prédéterminée en fonction dudit écart.

Et avantageusement, le procédé selon l'invention peut comprendre en outre une étape de lecture dans une base de données de la tension de polarisation de la source lumineuse impulsionnelle.

Selon un autre aspect, l'invention concerne un procédé de déclenchement d'une source lumineuse impulsionnelle d'un cytomètre en flux comprenant les étapes selon la revendication 1.

Selon encore une autre caractéristique avantageuse du procédé de déclenchement d'une source lumineuse impulsionnelle selon l'invention, l'instant souhaité du déclenchement peut être déterminé en fonction du moment de réception du signal de détection et d'une durée, dite d'écoulement, déterminée en fonction d'une distance entre le premier module d'inspection et le deuxième module d'inspection, et/ou d'une vitesse du flux entre ledit premier module d'inspection et ledit deuxième module d'inspection. Ainsi il est possible de synchroniser le déclenchement de la source lumineuse en fonction dudit écoulement.

Selon un autre aspect de l'invention, il est proposé un dispositif électronique qui comprend des moyens agencés pour mettre en oeuvre toutes les étapes du procédé selon l'invention.

Selon encore un autre aspect de l'invention, il est proposé une source lumineuse commandée électroniquement et comprenant :
- des moyens agencés pour mettre en oeuvre toutes les étapes du procédé selon l'invention ; ou
- un dispositif selon l'invention.

Ainsi la source lumineuse déclenchée selon l'invention est apte à calculer en temps réel un retard temporel du signal de commande en fonction notamment des déclenchements antérieurs de ladite source lumineuse. Comme la fréquence des déclenchements antérieurs perturbe le délai de génération du rayonnement lumineux, l'introduction d'un retard temporel défini en fonction des précédents déclenchements permet ainsi de minimiser la variabilité de l'instant de l'émission lumineuse. Ce dernier est donc moins aléatoire et d'avantage déterministe.

Selon un premier mode de réalisation de l'invention, la source lumineuse commandée électroniquement peut être de type laser.

Alternativement ou en plus, la source lumineuse commandée électroniquement peut être de type impulsionnel.

Préférentiellement, la source lumineuse peut être une source laser supercontinuum impulsionnelle.

Selon encore un autre aspect de l'invention, l'invention propose un cytomètre en flux comprenant :
- un canal fluidique apte à faire circuler un fluide comportant des particules en suspension,
- un premier module d'inspection disposé au niveau d'une première région et apte à mesurer au moins une caractéristique physique d'au moins une particule en suspension dans le fluide traversant ladite première région,
- un deuxième module d'inspection disposé au niveau d'une deuxième région et apte à mesurer au moins une caractéristique optique d'au moins une particule en suspension dans le fluide traversant ladite deuxième région,
- une source lumineuse impulsionnelle pour éclairer ladite deuxième région en vue de mesurer ladite au moins une caractéristique optique ;
le cytomètre en flux selon l'invention pouvant comprendre en outre des moyens agencés pour mettre en oeuvre toutes les étapes du procédé selon l'invention et/ou au moins un dispositif électronique selon l'invention et configuré pour déclencher une source lumineuse impulsionnelle. Il est ainsi possible de commander le déclenchement de la source lumineuse impulsionnelle en fonction de son usage et avec une meilleure précision temporelle quant à l'instant de déclenchement.

Selon encore un autre aspect de l'invention, l'invention propose un cytomètre en flux comprenant :
- un canal fluidique apte à faire circuler un fluide comportant des particules en suspension,
- un premier module d'inspection disposé au niveau d'une première région dudit canal fluidique et apte à mesurer au moins une caractéristique physique d'au moins une particule en suspension dans le fluide traversant ladite première région,
- un deuxième module d'inspection disposé au niveau d'une deuxième région et apte à mesurer au moins une caractéristique optique d'au moins une particule en suspension dans le fluide traversant ladite deuxième région, et
le cytomètre en flux selon l'invention pouvant comprendre en outre une source lumineuse impulsionnelle selon l'invention pour éclairer ladite deuxième région en vue de mesurer ladite au moins une caractéristique optique.

Avantageusement, dans le cytomètre en flux selon la présente invention, la durée de temporisation de la source lumineuse peut être définie en outre en fonction du temps de parcours des particules en suspension entre le premier module d'inspection et le second module d'inspection. De cette manière, le déclenchement d'au moins une mesure optique réalisée au niveau du deuxième module d'inspection est d'avantage synchronisée avec le passage desdites particules en suspension. Il est possible de réduire les dimensions de la fenêtre optique au travers de laquelle les mesures optiques sont réalisées, et donc de minimiser la probabilité de mesures de doublets de particules.

Enfin, selon un dernier mode de réalisation de l'invention, le deuxième module d'inspection (24) peut être agencé pour mesurer au moins la lumière diffusée et/ou absorbée et/ou émise par les particules à analyser en suspension dans ledit fluide traversant ladite deuxième région (26).

### Description des figures et modes de réalisation

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre un schéma de principe d'un exemple de dispositif électronique selon l'invention ;
- la FIGURE 2A est une représentation d'un exemple de procédé de déclenchement d'une source lumineuse impulsionnelle selon la présente invention et dont l'instant d'émission est contrôlé;
- la FIGURE 2B est une représentation d'un exemple de procédé de déclenchement d'une source lumineuse impulsionnelle selon la présente invention et dont l'intensité lumineuse est contrôlé;
- la FIGURE 3 illustre de manière schématique un système de cytométrie en flux selon la présente invention, composé de deux modules d'inspection et intégrant un dispositif électronique selon l'invention ;
- la FIGURE 4 illustre un chronogramme d'un procédé de déclenchement de la source laser supercontinuum d'un cytomètre en flux ;
- la FIGURE 5 est un graphique illustrant les performances de déclenchement d'une source lumineuse selon la présente invention ;
- la FIGURE 6 est un graphique illustrant la régulation en intensité de l'impulsion lumineuse selon le dispositif de l'invention.

Ces modes de réalisation étant nullement limitatifs, on pourra notamment considérer des variantes de l'invention ne comprenant qu'une sélection de caractéristiques décrites par la suite de manière isolées (même si cette sélection est isolée au sein d'une phrase comprenant d'autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Le principe inhérent à l'invention est, d'une part, de déclencher la source lumineuse en tenant compte d'une valeur variable correspondant au retard généralement constaté pour une fréquence de déclenchement donnée et, d'autre part, de paramétrer la polarisation de ladite source lumineuse en fonction des utilisations antérieures afin de contrôler l'intensité lumineuse de l'impulsion émise. Pour ce faire, l'invention consiste en un procédé de déclenchement d'une source lumineuse, à un moment prédéfini et calculé en fonction de paramètres variables tels que le PCD et/ou la gigue et/ou le temps de migration entre le premier module d'inspection et le second module d'inspection dans le cas d'une utilisation en cytométrie. Par ailleurs, ces paramètres dépendent à la fois de la source lumineuse, de son utilisation et de l'instrumentation dans laquelle elle est intégrée.

Le procédé propose de réaliser au moins une itération des étapes suivantes :
- réception d'un signal de commande servant à déclencher une source lumineuse,
- détermination de la durée, dite écart de déclenchement, qui s'est écoulée entre la réception dudit signal de commande et un signal de commande précédent, cet écart étant à l'origine de variations imprévisibles sur l'instant de l'émission de l'impulsion lumineuse dans le cas d'une source impulsionnelle,

- détermination d'une valeur de retard de déclenchement de ladite source lumineuse en fonction dudit écart et grâce à une table de correspondance et/ou une formule mathématique et/ou par étalonnage préalable de ladite source lumineuse,
- éventuellement, ajout de termes correctifs supplémentaires - constants ou variables - afin de déterminer un retard avant le déclenchement de ladite source lumineuse en fonction de ladite valeur de retard et dudit instant souhaité,
- temporisation du signal de commande en fonction dudit retard ainsi calculé, et
- génération d'un signal électrique de déclenchement à la fin de ladite étape de temporisation.

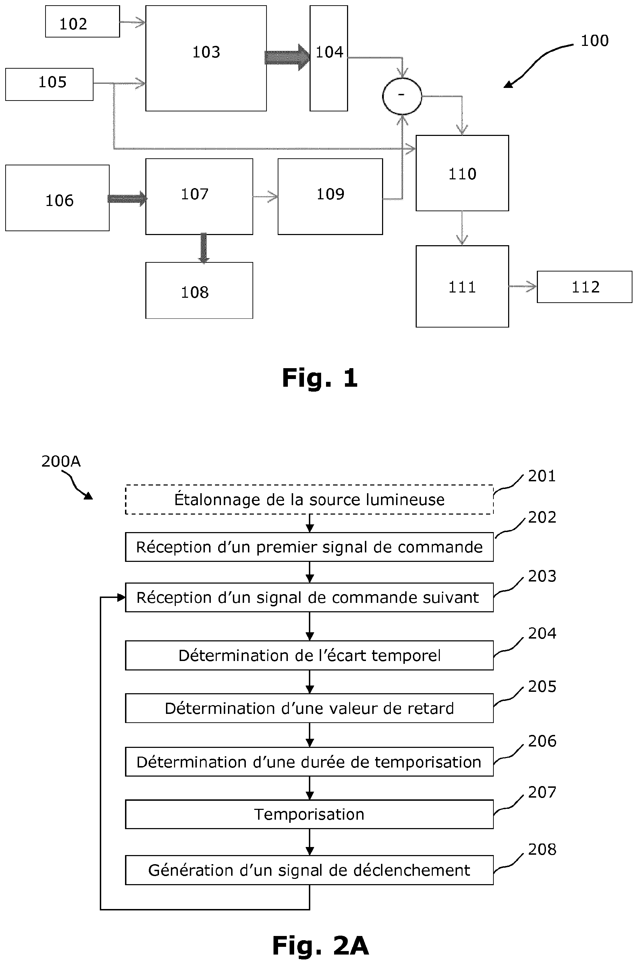

La FIGURE 1 illustre un schéma de principe d'un exemple de dispositif électronique 100 de déclenchement d'une source lumineuse à un instant souhaité selon un mode de réalisation de l'invention.

Le dispositif électronique 100 est dénommé par la suite dispositif électronique de pré-compensation.

Le dispositif 100 représenté sur la FIGURE 1 comprend une mémoire 103 dans laquelle sont enregistrées des valeurs de retard de déclenchement t3 pour une gamme de fréquence étendue, par exemple de quelques hertz à plusieurs kilohertz. A chaque valeur d'écart de déclenchent, également appelé fréquence dans la suite de la demande, correspond une valeur de retard de déclenchement t3. Ces valeurs de retard de déclenchement dépendent de la source lumineuse considérée et sont enregistrées dans la mémoire 103 du dispositif électronique de pré-compensation 100 lors d'un étalonnage préalable de la source lumineuse.

Les valeurs de retard de déclenchement t3 sont l'une des composantes temporelles qui sont déterminées et exploitées par la présente invention pour définir une durée de temporisation avant le déclenchement de la source lumineuse. L'étalonnage en question peut consister par exemple en la mesure du délai entre l'émission du signal de commande de la source lumineuse et l'apparition de l'impulsion lumineuse correspondante.

Alternativement, un modèle mathématique peut être établi pour définir la valeur du retard temporel en fonction de la fréquence de déclenchement de ladite source lumineuse. Selon les applications, on peut éventuellement ajouter à ce délai d'autres paramètres temporels pour compléter l'étalonnage.

Alternativement, cette base de données ou ce modèle mathématique permettant la détermination du retard à appliquer peuvent être systématiquement mis à jour en temps réel lors de l'utilisation du système global.

Une horloge interne 102 cadence toutes les opérations. Par exemple, et à titre non limitatif, la fréquence de l'horloge peut être de 48MHz. D'une façon générale, il est préférable que la fréquence de l'horloge soit supérieure à la fréquence des événements à l'origine des déclenchements de la source lumineuse.

Les signaux d'entrée 105 correspondent aux événements à l'origine des déclenchements de la source lumineuse. A chaque événement déclencheur correspond un signal TTL.

La mémoire 103 enregistre ainsi chaque événement déclencheur et la fréquence de récurrence de ces événements est déterminée. En fonction de la table de correspondance et/ou du modèle mathématique défini par étalonnage de la source lumineuse, la valeur de retard de déclenchement t3 à appliquer est déterminée par l'unité de contrôle 104 par lecture dans la mémoire 103. L'unité de contrôle 104 correspond à n'importe quel type de processeur.

Optionnellement, un offset t2 peut être ajouté à cette valeur de retard de déclenchement t3 afin de prendre en compte d'autres paramètres extrinsèques ou intrinsèques à la source lumineuse et afin de déterminer la durée de temporisation à appliquer.

La valeur de cet offset peut être définie à l'aide de moyens d'incrémentation 106 qui peuvent être par exemple des boutons poussoirs. Des moyens d'affichage 108 comprenant des éléments logiques de conversion 107 permettent à l'utilisateur de visualiser la valeur de l'offset t2 configuré.

L'offset t2 ainsi paramétré est ensuite converti dans un format compatible avec celui de t3, à l'aide d'un module de conversion 109.

L'offset t2 est ensuite ajouté à la valeur de retard de déclenchement t3 dans l'unité de sommation 110 et un signal électrique 111 est mis en forme, par exemple sous la forme d'un signal TTL ou d'un créneau d'amplitude comprise entre 3.5V et 5V et sur une largeur de 10µs. La forme du signal électrique ainsi mis en forme et décrit ici n'est pas limitatif.

Ainsi, le dispositif électronique de pré-compensation 100 est apte à stimuler l'émission de la source lumineuse qu'elle pilote en émettant un signal électrique 112 dont le retard temporel par rapport au signal d'entrée est au moins fonction de la fréquence d'occurrence d'un signal d'entrée.

La présente invention trouve sa pleine application dans tous les dispositifs qui intègrent une source lumineuse déclenchée et dont le déclenchement dépend d'au moins un événement extérieur détectable. Par exemple, mais à titre non limitatif, le dispositif électronique de pré-compensation selon la présente invention peut consister en une carte électronique intégrée dans une source lumineuse déclenchée ou indépendante ; et elle peut être utilisée préférentiellement dans des cytomètres en flux, dans des systèmes de capteurs, dans des systèmes de télédétection par LASER (LIDAR)...

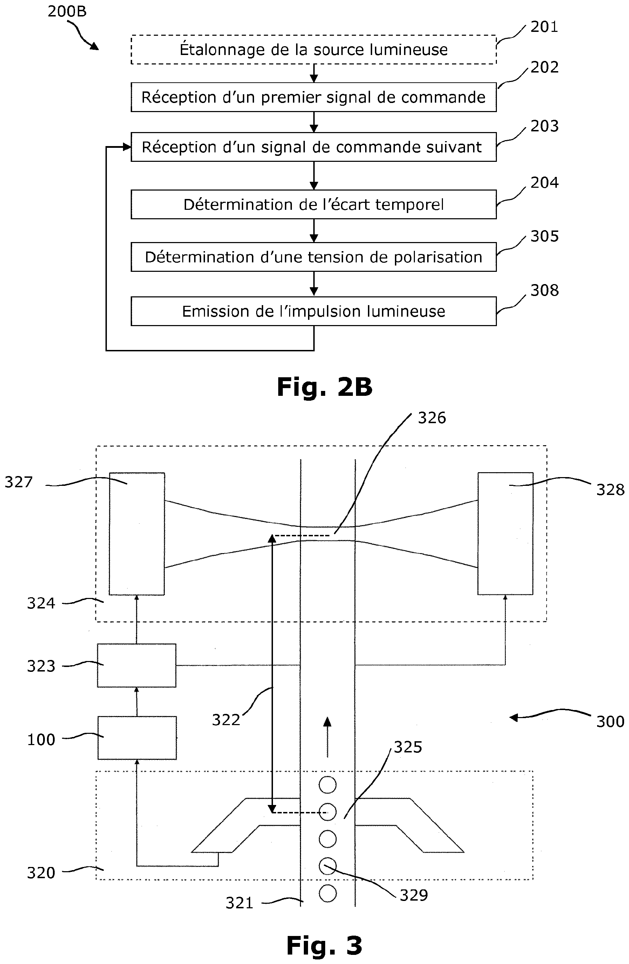

En référence aux FIGURES 2A et 2B, deux modes particuliers de réalisation du procédé selon l'invention vont maintenant être décrits.

La FIGURE 2A est une représentation d'un exemple de procédé de déclenchement d'une source lumineuse impulsionnelle dont l'instant d'émission est contrôlé, tandis que la FIGURE 2B illustre un procédé de déclenchement d'une source lumineuse dont l'intensité de l'impulsion optique est contrôlée.

Les procédés 200A et 200B représentés respectivement sur les FIGURES 2A et 2B comprennent une première étape facultative d'étalonnage 201 de la source lumineuse afin de déterminer les caractéristiques temporelles intrinsèques de déclenchement de la source. Cette étape 201 comprend par exemple la détermination du temps de réponse moyen de ladite source lumineuse en fonction de la fréquence de déclenchement : pour chaque fréquence ou plage de fréquence, le temps de réponse est mesuré et enregistré dans une zone mémoire afin de permettre dans les étapes ultérieures du procédé 200A de déterminer la temporisation. L'étape 201 peut aussi consister en un étalonnage de l'intensité lumineuse de la source impulsionnelle en fonction de la fréquence de déclenchement : pour chaque fréquence ou plage de fréquences, la tension de polarisation nécessaire pour obtenir une intensité lumineuse donnée est enregistrée dans une zone mémoire afin de permettre, dans les étapes ultérieures du procédé 200B, de déterminer la tension de polarisation nécessaire de la ladite source ou d'une source annexe ayant la même fonction.

Alternativement, l'étalonnage 201 de la source lumineuse peut consister en la détermination d'une fonction de régression reliant le temps de réponse à la fréquence de déclenchement.

Une fois que l'étape 201 d'étalonnage est réalisée, les étapes suivantes sont réalisées.

Un premier signal de commande est réceptionné lors d'une étape 202. Il peut provenir de n'importe quel dispositif avec lequel la source lumineuse est en interaction. Plus particulièrement, il peut s'agir d'un dispositif extérieur à la source lumineuse, comme un module d'inspection par exemple, servant à synchroniser la source lumineuse. Il peut aussi s'agir d'un dispositif interne à la source lumineuse comme une horloge interne par exemple.

L'étape suivante du procédé objet de l'invention consiste en une autre étape de réception d'un signal de commande 202 suivant. Préférentiellement, le signal de commande suivant a la même origine que le premier signal de commande reçu. Cependant, la source lumineuse et le procédé de déclenchement selon l'invention ne se limitent pas à une seule origine et une pluralité de sources de déclenchement pour ladite source lumineuse peut être envisagée sans sortir du cadre de l'invention.

Puis, une étape 204 permet de déterminer la durée exacte qui s'est écoulée entre les deux signaux de commande.

Alternativement, comme détaillé dans les paragraphes précédent, la durée calculée à l'étape 204 peut être obtenue en prenant en compte une pluralité de signaux de commandes précédents, et en calculant une moyenne arithmétique ou n'importe quelle autre loi mathématique à partir de la durée séparant la réception de deux signaux de commandes successifs.

Dans le procédé illustré sur la FIGURE 2A, cette durée est ensuite utilisée dans une étape 205 pour déterminer la valeur du retard de déclenchement à associer à cette durée. La détermination de cette valeur de retard de déclenchement peut être réalisée de n'importe quelle façon sans sortir du cadre de la présente invention. La valeur du retard de déclenchement est soit lue dans une mémoire dans laquelle elle a été mémorisée lors de l'étape d'étalonnage, soit déterminée à partir d'une relation mathématique déterminée lors de l'étape d'étalonnage. L'étape suivante 206 consiste à déterminer la durée de temporisation qui sera appliquée à la source lumineuse. Cette durée de temporisation prend en compte la valeur du retard de déclenchement déterminée à l'étape précédente mais peut inclure aussi d'autre paramètres afin de moduler cette valeur de retard avec des paramètres constants, variables ou statistiques afin de prendre en compte d'autres influences extérieures ou intérieures à la source lumineuse. Particulièrement, dans le cadre d'une utilisation dans un cytomètre en flux, il est possible d'ajouter à la valeur du retard obtenu à l'étape 205 une composante temporelle correspondant au temps de migration des particules entre les deux modules d'inspection du cytomètre en flux.

L'étape 207 consiste en une temporisation dont la durée est égale à celle qui est déterminée à l'étape 206.

Enfin, un signal de déclenchement est émis à l'étape 208 afin de déclencher la source lumineuse.

Le procédé est itératif et répétée à partir de l'étape 202, lorsqu'un nouveau signal de commande est reçu.

Dans le procédé illustré sur la FIGURE 2B, la durée calculée lors de l'étape 204 permet de déterminer une tension de polarisation 305 nécessaire pour obtenir l'intensité lumineuse souhaitée de l'impulsion émise par la source impulsionnelle. La détermination de cette tension de polarisation peut être réalisée de n'importe quelle façon sans sortir du cadre de la présente invention : elle peut être lue dans une mémoire dans laquelle elle a été mémorisée lors de l'étape d'étalonnage 201, ou encore déterminée à partir d'une relation mathématique déterminée lors de l'étape d'étalonnage 201.

Lors de l'étape suivante 308, l'impulsion lumineuse émise par la source aura ainsi une intensité qui ne sera pas affecté par l'utilisation antérieure de ladite source, et notamment de la fréquence des utilisations antérieures.

La FIGURE 3 illustre de manière schématique un exemple d'un système de cytométrie en flux selon la présente invention.

Le système de cytométrie en flux 300 représenté sur la FIGURE 3 comprend un canal fluidique 321, deux modules d'inspection 320 et 324, un contrôleur 323 et un dispositif électronique de pré-compensation, tel que par exemple le dispositif 100 de la FIGURE 1. Dans l'exemple décrit ici, le flux analysé comprend des cellules de sang circulant dans le canal fluidique 321. Cependant, il peut s'agir de n'importe quel type de flux comprenant des particules.

Le système de cytométrie en flux 300 comprend une première région 325 distante d'une seconde région 326 et dans lesquelles les cellules analysées 329 défilent de manière séparée les unes des autres avec des écarts variables. Cette distance 322 peut varier selon les systèmes de cytomètre en flux mais reste généralement comprise entre quelques dizaines de micromètres et quelques centaines de micromètres.

Dans l'hypothèse où les cellules analysées 329 se déplacent à vitesse constante, le temps de parcours des cellules analysées 329 dans le canal fluidique 321, en particulier entre la première région 325 et la deuxième région 326, est constant.

Le premier module d'inspection 320 est situé de part et d'autre de la première région 325 et permet de réaliser une mesure d'une caractéristique électrique du fluide qui traverse ladite première région 325. En l'absence de cellules dans le canal fluidique 321, le flux qui traverse la première région 325 définit une impédance de charge mesurée par deux électrodes placées de part et d'autre dudit canal. Lorsqu'une cellule traverse la première région 325, elle entraîne une augmentation de l'impédance de charge. Cette variation d'impédance permet notamment de déterminer d'une part le volume de la cellule et, d'autre part, d'effectuer un comptage cellulaire.

Le deuxième module d'inspection 324 est situé au niveau de la seconde région 326, de part et d'autre du canal fluidique 321. Il permet de réaliser au moins une mesure des caractéristiques optiques du fluide qui traverse ladite seconde région 326. Il comprend au moins une source lumineuse déclenchée 328 et au moins une unité d'analyse 327 afin de réaliser par exemple des mesures optiques d'absorption, de réflexion, de transmission et/ou de fluorescence et de caractériser des propriétés physico-chimiques des particules, en particulier des cellules. L'au moins une source lumineuse déclenchée 328 peut être un laser, une source supercontinuum ou de n'importe quel autre type de source déclenchée compatible avec ces analyses, notamment des sources de types impulsionnels par exemple.

Le déclenchement du deuxième module d'inspection 324 est régulé par un contrôleur 323 et conditionné par le passage d'une cellule 329 devant le premier module d'inspection 320. Pour ce faire, le contrôleur 323 reçoit un signal de détection du premier module d'inspection 320 et émet un signal de commande d'activation du deuxième module d'inspection 324.

Le dispositif électronique de pré-compensation 100 de la source lumineuse 328 est intercalé entre le contrôleur 323 d'une part, et le premier module d'inspection 320. Il permet ainsi d'introduire une durée de temporisation qui est déterminée en fonction de différents paramètres qui peuvent être variables tels que le PCD ou la gigue, et/ou invariants tels que le temps de migration des particules entre le premier module d'inspection et le second module d'inspection. Ces paramètres peuvent être notamment :
- La distance entre la première région 325 et la deuxième région 326,
- La vitesse de propagation des cellules 329 dans le canal fluidique,
- La variation d'apparition des cellules 329,
- Le temps de déclenchement de la source lumineuse 328.

Ainsi, la source lumineuse 328 est déclenchée juste au moment où une cellule détectée préalablement par le premier module d'inspection 320 passe dans la deuxième région 326. De la même manière, l'analyseur optique 327 est commandé pour effectuer la mesure de manière synchrone avec le déclenchement de la source lumineuse déclenchée 328.

Dans l'exemple décrit à la FIGURE 1 et appliqué au présent dispositif, l'offset t2 correspond au temps de parcours des cellules 329 entre la première région 325 et la deuxième région 326. La valeur du retard de déclenchement t3 correspond quant à elle au temps de réponse de la source lumineuse 328. Comme évoqué précédemment, ce temps varie en fonction de la fréquence de déclenchement, donc de la fréquence d'occurrence d'une cellule 329 devant le premier module d'inspection 320.

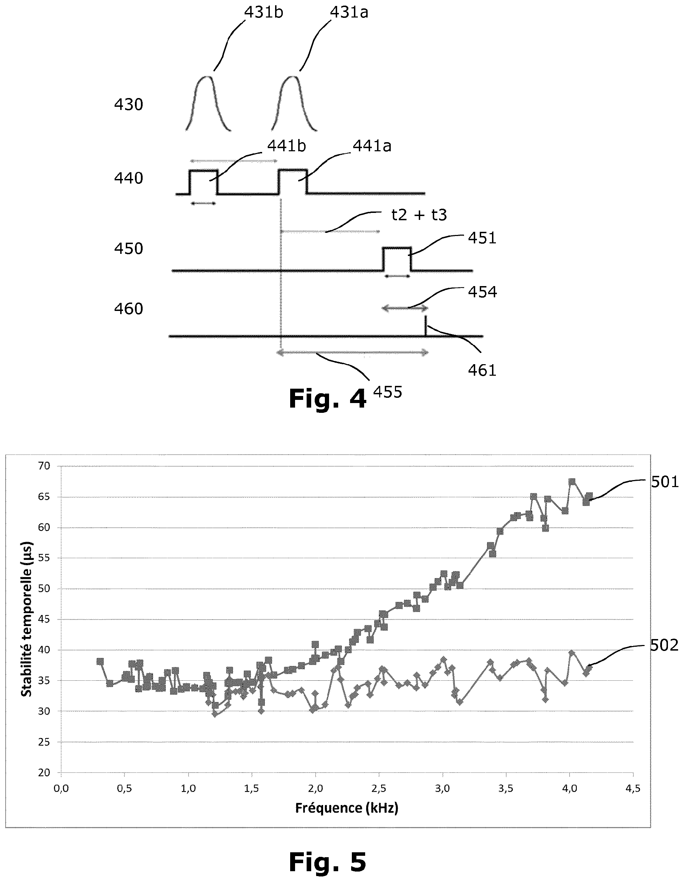

La FIGURE 4 illustre un chronogramme du procédé de déclenchement d'une source laser supercontinuum d'un cytomètre en flux. La ligne 430 représente une succession de signaux 431a et 431b issus du premier module d'inspection 320. Il s'agit par exemple de mesures d'impédances traduisant le passage de deux cellules consécutives 329 dans le canal fluidique 321 au niveau de la première région 325. Par exemple, le premier module d'inspection 320 mesure de manière continue l'impédance électrique du canal fluidique 321 au niveau de la première région 325. En l'absence de cellules, le premier module d'inspection mesure une valeur d'impédance initiale qui peut être bruitée en fonction de différents paramètres. Lorsqu'une cellule 329 entre dans la première région 325, l'impédance mesurée augmente sensiblement au-delà du niveau de bruit mesuré précédemment. Une valeur de seuil peut être définie afin de discrétiser la présence ou l'absence de cellules 329 dans la première région 325.

Les mesures réalisées par le premier module d'inspection servent de signal de commande.

La ligne 440 représente un signal TTL correspondant au signal d'impédance 431 et mis en forme par le contrôleur 323. La largeur des motifs 441a et 441b correspond sensiblement à la largeur à mi-hauteur du signal d'impédance 431a et 431b, par exemple de l'ordre de 10µs. Les deux signaux 441a et 441b sont séparés de la même durée t1 que celle qui sépare les motifs 431a et 431b. Cette durée de séparation t1 correspond à l'intervalle temporel entre le passage de deux cellules consécutives 329 devant le premier module d'inspection 320. Elle permet aussi de définir indifféremment une fréquence de récurrence des cellules f1=1/t1.

La ligne 450 représente le signal en sortie du contrôleur 323 retardé d'une durée de temporisation t2+t3. Ainsi, le motif 451 est un signal de commande pour le deuxième module d'inspection 324 et l'analyseur optique 327, correspondant au signal d'impédance 431a.

La ligne 460 représente le signal lumineux en sortie de la source lumineuse déclenchée 328. Dans l'exemple illustré à la FIGURE 4, il s'agit d'une impulsion lumineuse 461 qui apparaît après un certain retard 454 vis-à-vis du signal de commande 451 émis par le contrôleur 323.

Ce retard 454 dépend de plusieurs paramètres inhérents à la source lumineuse déclenchée 328 elle-même. Il s'agit notamment du temps de création de l'impulsion (PCD) qui est constant pour une fréquence de déclenchement donné, et de la gigue temporelle qui est un paramètre purement statistique. Aussi, en déterminant la fréquence d'occurrence f1 des cellules 329 par leur passage devant le premier module de d'inspection 320, on peut déterminer la valeur du retard de déclenchement t3 à appliquer au déclenchement de la source lumineuse 328.

Le tableau ci-dessous illustre un exemple de corrélation entre la valeur de retard de déclenchement en fonction de la durée t1 séparant deux passages consécutifs de cellules 329 devant le premier module d'inspection 320 et utilisé pour déterminer la durée de temporisation du procédé selon l'invention :

**Tableau 1 : Table de correspondance entre l'intervalle temporelle d'occurrence des cellules devant le premier module d'inspection et la correction temporelle à appliquer au déclenchement de la source lumineuse.**

| t1(ms) | | t3 (µs) |
|---|---|---|
| Min | Max | |
| 0,894 | 100,000 | 0 |
| 0,630 | 0,893 | 1,5 |
| 0,569 | 0,629 | 2,5 |
| 0,527 | 0,568 | 4 |
| 0,510 | 0,526 | 3 |
| 0,470 | 0,509 | 8 |
| 0,449 | 0,469 | 3 |
| 0,385 | 0,448 | 9 |
| 0,351 | 0,384 | 13 |
| 0,323 | 0,350 | 14 |
| 0,292 | 0,322 | 19 |
| 0,270 | 0,291 | 24 |
| 0,250 | 0,269 | 28 |

Par exemple, pour des temps t1 compris entre 0.25 ms et 0.269 ms la valeur du retard de déclenchement t3 à appliquer à la source lumineuse est de 28 µs. En revanche, si t1 est compris entre 0.894 ms et 2 ms, le retard de déclenchement t3 est nul.

Les corrélations entre la fréquence de déclenchement f1 et le retard de déclenchement t3 à appliquer à la source lumineuse sont obtenues par étalonnage de la source lumineuse déclenchée correspondante. Ainsi, pour chaque fréquence de déclenchement, ou pour chaque plage de fréquence de déclenchement, on mesure le temps moyen d'apparition du signal lumineux obtenu sur plusieurs déclenchements.

La table de correspondance entre fréquence d'occurrence f1 et retard de déclenchement t3 - telle qu'illustrée dans le TABLEAU 1 - est ensuite enregistrée sur le dispositif électronique de pré-compensation selon la présente invention.

La FIGURE 5 est un graphique illustrant les performances de déclenchement d'une source lumineuse à 4.2 kHz à l'aide de la présente invention, en fonction de la fréquence dudit déclenchement.

La courbe 501 représente la variabilité du déclenchement de la source lumineuse de l'art antérieur (équivalent à la référence 454), sans le dispositif électronique de pré-compensation 100 selon l'invention.

La courbe 502 traduit quant à elle, la variabilité du déclenchement de la source lumineuse (équivalent à la référence 455 avec t2=0) lorsque le dispositif électronique de pré-compensation 100 est utilisé pour commander la source lumineuse 328. Les mesures sont réalisées jusqu'à 4.2 kHz. Sans dispositif électronique de pré-compensation 100, la variabilité 455 du déclenchement de l'impulsion lumineuse 461 croît avec la fréquence et atteint environ 36.5 µs. En revanche, en utilisant le dispositif électronique de pré-compensation 100 selon l'invention, la stabilité temporelle du déclenchement est améliorée et la variabilité du déclenchement n'est plus que de 9.9 µs.

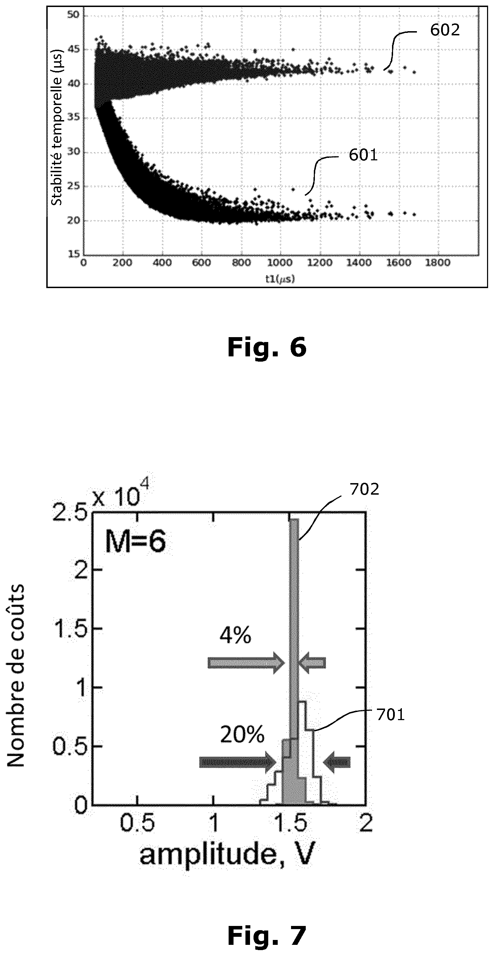

La FIGURE 6 est un graphique illustrant les performances de déclenchement d'une source lumineuse à 25 kHz à l'aide de la présente invention, en fonction du temps entre chaque signal électrique de la cellule biologique correspondant à l'inverse de la fréquence dudit déclenchement.

Ces mesures ont donc été effectuées en simulant le passage des cellules biologiques dans la fenêtre optique de comptage. Pour augmenter la précision des mesures et diminuer le temps de calibration des lasers de supercontinuum, nous acquérons automatiquement : la fréquence de déclenchement de la source, le temps entre le signal de déclenchement et l'impulsion laser.

Ces mesures sont ensuite traitées grâce à un programme informatique et une loi mathématique a d'ailleurs été déterminée en linéarisant autour d'un point de référence. Ensuite, l'intégration d'une loi de pré-compensation déduite de la loi exponentielle précédente permet d'agir sur les impulsions laser obtenues.

La courbe 601 représente la variabilité du déclenchement de la source lumineuse de l'art antérieur (équivalent à la référence 454), sans le dispositif électronique de pré-compensation 100 selon l'invention.

La courbe 602 traduit quant à elle, la variabilité du déclenchement de la source lumineuse (équivalent à la référence 455 avec t2=0) lorsque le dispositif électronique de pré-compensation 100 est utilisé pour commander la source lumineuse 328. Les mesures sont réalisées jusqu'à 25 kHz. Sans dispositif électronique de pré-compensation 100, la variabilité 455 du déclenchement de l'impulsion lumineuse 461 croît avec la fréquence et atteint environ 22 µs. En revanche, en utilisant le dispositif électronique de pré-compensation 100 selon l'invention, la stabilité temporelle du déclenchement est améliorée et la variabilité du déclenchement n'est plus que de 6 µs.

La création de cette carte électronique nous a permis d'améliorer différents points techniques par rapport à la carte électronique décrite à l'exemple 5 tels que :
- Diminuer les temps d'expérimentation
- Etre plus proche des conditions d'un analyseur d'hématologie
- Augmenter la précision des mesures
- Augmenter la précision de la pré-compensation Laser à appliquer

La FIGURE 7 illustre un graphique représentant la régulation en intensité de l'impulsion lumineuse à l'aide de l'invention.

Plus particulièrement, la FIGURE 7 illustre deux histogrammes de l'amplitude mesurée (en Volts) par une photodiode située en face d'une source impulsionnelle et représentative de l'intensité lumineuse de ladite source dans deux situations différentes :
- Une première courbe 701 illustre la variation de l'intensité lumineuse pour plusieurs tirs successifs de la source lumineuse impulsionnelle sans le dispositif de compensation d'amplitude selon l'invention. On peut constater ainsi qu'une majorité d'impulsion a une amplitude lumineuse mesurée de 1.6 V. La distribution des amplitudes lumineuses mesurée s'étale entre 1.3 V et 1.7 V, avec une largeur à mi-hauteur de l'ordre de 20% par rapport à l'amplitude moyenne mesurée desdites impulsions.
- Une seconde courbe 702 illustre la variation de l'intensité lumineuse pour plusieurs tirs successifs de la source lumineuse impulsionnelle avec le dispositif de compensation d'amplitude selon l'invention. On peut constater que, dans ce cas, la distribution des amplitudes lumineuses mesurée a une largeur à mi-hauteur de l'ordre de 4% par rapport à l'amplitude moyenne mesurée desdites impulsions.

Ainsi la FIGURE 7 démontre que le dispositif selon l'invention - sous toutes ses formes revendiquées - permet de réduire la variabilité de l'intensité de la source lumineuse impulsionnelle.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de déclenchement d'une source lumineuse impulsionnelle comprenant au moins une itération des étapes suivantes :
- réception d'un signal de commande,
- détermination d'une durée, dite écart, entre la réception dudit signal de commande et au moins un signal de commande précédent,
- ajustement d'au moins un paramètre de contrôle de ladite source lumineuse impulsionnelle en fonction au moins dudit écart,
- génération d'au moins un signal électrique de déclenchement de la source lumineuse impulsionnelle en fonction dudit au moins un paramètre de contrôle ajusté durant l'étape précédente,
- déclenchement de la source lumineuse impulsionnelle en fonction dudit au moins un signal électrique de déclenchement,
**caractérisé en ce que** l'étape d'ajustement d'au moins un paramètre de contrôle de la source lumineuse impulsionnelle comprend au moins une itération des étapes suivantes :
- détermination en fonction de l'écart, d'une valeur de retard de déclenchement de ladite source lumineuse associée audit écart, et détermination d'une durée de temporisation avant le déclenchement de ladite source lumineuse en fonction de ladite valeur de retard et dudit instant souhaité.

2. **.**Procédé selon la revendication précédente, **caractérisé en ce que** la valeur de retard de déclenchement est une valeur prédéterminée en fonction de l'écart.

3. Procédé selon la revendication 2, **caractérisé en ce qu'**il comprend en outre une étape de lecture dans une base de données de la valeur de retard de déclenchement.

4. Procédé selon l'une quelconque des revendications précédentes, **caractérisé en ce que** l'étape d'ajustement d'au moins un paramètre de contrôle de la source lumineuse impulsionnelle comprend en outre une étape de détermination, en fonction de l'écart, d'une tension de polarisation de la source lumineuse impulsionnelle.

5. Procédé selon la revendication précédente, **caractérisé en ce que** la tension de polarisation est une valeur prédéterminée en fonction de l'écart.

6. Procédé selon l'une quelconque des revendications 4 ou 5, **caractérisé en ce que** la valeur de la tension polarisation est lue dans une base de données.

7. Procédé de déclenchement d'une source lumineuse impulsionnelle d'un cytomètre en flux selon l'une quelconque des revendications précédentes, ledit cytomètre en flux comprenant :
- un premier module d'inspection apte à mesurer au moins une caractéristique électrique,
- un deuxième module d'inspection, coopérant avec ladite source lumineuse impulsionnelle, pour mesurer au moins une caractéristique optique à l'aide de la source lumineuse impulsionnelle,
ledit procédé étant **caractérisé en ce qu'**il met en oeuvre les étapes suivantes :
- mesure d'au moins une grandeur électrique par le premier module d'inspection,
- si la valeur mesurée par le premier module d'inspection est supérieure ou égale à une valeur de seuil prédéterminée, déclenchement de la source lumineuse impulsionnelle du deuxième module d'inspection conformément au procédé de l'une quelconque des revendications précédentes.

8. Procédé selon la revendication précédente, **caractérisé en ce que** le déclenchement de ladite source lumineuse impulsionnelle est commandé notamment en fonction du moment de réception du signal de détection et d'une durée, dite d'écoulement, déterminée en fonction :
- d'une distance entre le premier module d'inspection et le deuxième module d'inspection, et
- d'une vitesse du flux entre ledit premier module d'inspection et ledit deuxième module d'inspection.

9. Dispositif électronique (100) pour déclencher une source lumineuse impulsionnelle, **caractérisé en ce qu'**il comprend des moyens agencés pour mettre en oeuvre toutes les étapes du procédé selon l'une quelconque des revendications 1 à 6.

10. Source lumineuse impulsionnelle commandée électroniquement et comprenant un dispositif selon la revendication 9.

11. Source selon la revendication précédente, **caractérisée en ce qu'**il comprend, et en particulier consiste en, une source laser supercontinuum.

12. Cytomètre en flux comprenant :
- un canal fluidique (321) apte à faire circuler un fluide comportant des particules en suspension (329),
- un premier module d'inspection (320) disposé au niveau d'une première région (325) dudit canal fluidique (321) et apte à mesurer au moins une caractéristique physique d'au moins une particule en suspension dans le fluide traversant ladite première région (325),
- un deuxième module d'inspection (324) disposé au niveau d'une deuxième région (326) et apte à mesurer au moins une caractéristique optique d'au moins une particule en suspension dans le fluide traversant ladite deuxième région (326), et
- une source lumineuse impulsionnelle pour éclairer ladite deuxième région en vue de mesurer ladite au moins une caractéristique optique ;
**caractérisé en ce qu'**il comprend en outre un dispositif selon la revendication 9 pour déclencher la source lumineuse impulsionnelle,

13. Cytomètre en flux selon la revendication 12, **caractérisé en ce que** le deuxième module d'inspection (324) est agencé pour mesurer au moins la lumière diffusée et/ou absorbée et/ou émise par ledit fluide traversant ladite deuxième région (326).

## Patentansprüche

1. Verfahren zum Auslösen einer gepulsten Lichtquelle, umfassend mindestens eine Iteration der folgenden Schritte:
- Empfangen eines Steuersignals,
- Bestimmen einer Zeitdauer, als Abweichung bezeichnet, zwischen dem Empfang des Steuersignals und mindestens einem vorhergehenden Steuersignal,
- Anpassen mindestens eines Steuerparameters der gepulsten Lichtquelle in Abhängigkeit von mindestens der Abweichung,
- Erzeugen mindestens eines elektrischen Signals zum Auslösen der gepulsten Lichtquelle in Abhängigkeit von dem mindestens einen Steuerparameter, der während des vorhergehenden Schritts angepasst wurde,
- Auslösen der gepulsten Lichtquelle in Abhängigkeit von dem mindestens einen elektrischen Auslösesignal,
**dadurch gekennzeichnet, dass** der Schritt des Anpassens mindestens eines Steuerparameters der gepulsten Lichtquelle mindestens eine Iteration der folgenden Schritte umfasst:
- Bestimmen eines Verzugswerts für das Auslösen der Lichtquelle, der mit der Abweichung verknüpft ist, in Abhängigkeit von der Abweichung, und
Bestimmen einer Verzögerungsdauer vor dem Auslösen der Lichtquelle in Abhängigkeit von dem Verzugswert und dem gewünschten Zeitpunkt.

2. Verfahren nach dem vorstehenden Anspruch,
**dadurch gekennzeichnet, dass** der Auslöseverzugswert ein vorbestimmter Wert in Abhängigkeit von der Abweichung ist.

3. Verfahren nach Anspruch 2, **dadurch gekennzeichnet, dass** es ferner einen Schritt eines Auslesens des Auslöseverzugswert aus einer Datenbank umfasst.

4. Verfahren nach einem der vorstehenden Ansprüche,
**dadurch gekennzeichnet, dass** der Schritt des Anpassens mindestens eines Steuerparameters der gepulsten Lichtquelle ferner einen Schritt des Bestimmens einer Polarisationsspannung der gepulsten Lichtquelle in Abhängigkeit von der Abweichung umfasst.

5. Verfahren nach dem vorstehenden Anspruch,
**dadurch gekennzeichnet, dass** die Polarisationsspannung ein vorbestimmter Wert in Abhängigkeit von der Abweichung ist.

6. Verfahren nach einem der Ansprüche 4 oder 5,
**dadurch gekennzeichnet, dass** der Wert der Polarisationsspannung aus einer Datenbank ausgelesen wird.

7. Verfahren zum Auslösen einer gepulsten Lichtquelle eines Durchflusszytometers nach einem der vorstehenden Ansprüche, das Durchflusszytometer umfassend:
- ein erstes Prüfmodul, das geeignet ist, um mindestens eine elektrische Eigenschaft zu messen,
- ein zweites Prüfmodul, das mit der gepulsten Lichtquelle zusammenwirkt, um mindestens eine optische Eigenschaft unter Verwendung der gepulsten Lichtquelle zu messen,
wobei das Verfahren **dadurch gekennzeichnet ist, dass** es die folgenden Schritte durchführt:
- Messen mindestens einer elektrischen Größe durch das erste Prüfmodul,
- falls der durch das erste Prüfmodul gemessene Wert größer als oder gleich einem vorbestimmten Schwellenwert ist, Auslösen der gepulsten Lichtquelle des zweiten Prüfmoduls gemäß dem Verfahren nach einem der vorstehenden Ansprüche.

8. Verfahren nach dem vorstehenden Anspruch,
**dadurch gekennzeichnet, dass** das Auslösen der gepulsten Lichtquelle insbesondere in Abhängigkeit von dem Zeitpunkt des Empfangs des Detektionssignals und einer sogenannten Fließdauer gesteuert wird, die bestimmt wird in Abhängigkeit von:
- einem Abstand zwischen dem ersten Prüfmodul und dem zweiten Prüfmodul und
- einer Fließgeschwindigkeit zwischen dem ersten Prüfmodul und dem zweiten Prüfmodul.

9. Elektronische Vorrichtung (100) zum Auslösen einer gepulsten Lichtquelle, **dadurch gekennzeichnet, dass** sie Mittel umfasst, die angeordnet sind, um alle Schritte des Verfahrens nach einem der Ansprüche 1 bis 6 durchzuführen.

10. Elektronisch gesteuerte, gepulste Lichtquelle und umfassend eine Vorrichtung nach Anspruch 9.

11. Quelle nach dem vorstehenden Anspruch, **dadurch gekennzeichnet, dass** sie eine Superkontinuum-Laserquelle umfasst und insbesondere aus dieser besteht.

12. Durchflusszytometer, umfassend:
- einen Fluidkanal (321), der geeignet ist, um ein Fluid, das suspendierte Partikel (329) aufweist, zirkulieren zu lassen,
- ein erstes Prüfmodul (320), das an einem ersten Bereich (325) des Fluidkanals (321) angeordnet ist und geeignet ist, um mindestens eine physikalische Eigenschaft mindestens eines Partikels, der in dem den ersten Bereich (325) durchströmenden Fluid suspendiert ist, zu messen,
- ein zweites Prüfmodul (324), das an einem zweiten Bereich (326) angeordnet ist und geeignet ist, um mindestens eine optische Eigenschaft mindestens eines Partikels, der in dem den zweiten Bereich (326) durchströmenden Fluid suspendiert ist, zu messen, und
- eine gepulste Lichtquelle zum Beleuchten des zweiten Bereichs, um die mindestens eine optische Eigenschaft zu messen;
**dadurch gekennzeichnet, dass** es ferner eine Vorrichtung nach Anspruch 9 zum Auslösen der gepulsten Lichtquelle umfasst.

13. Durchflusszytometer nach Anspruch 12, **dadurch gekennzeichnet, dass** das zweite Prüfmodul (324) angeordnet ist, um mindestens das Licht, das durch das den zweiten Bereich (326) durchströmende Fluid gestreut und/oder absorbiert und/oder emittiert wird, zu messen.

## Claims

1. **A** method for triggering a pulsed light source comprising at least one iteration of the following steps:
- receiving a control signal;
- determining a duration, referred to as an interval, between receiving said control signal and at least one preceding control signal;
- adjusting at least one control parameter of said pulsed light source at least on the basis of said interval;
- generating at least one electrical signal for triggering the pulsed light source on the basis of said at least one control parameter adjusted during the preceding step;
- triggering the pulsed light source on the basis of said at least one electrical trigger signal,
**characterized in that** the step of adjusting at least one control parameter of said pulsed light source comprises at least one iteration of the following steps;
- determining, on the basis of the interval, a value of a delay in triggering said light source associated with said interval;
- determining a pause duration before triggering said light source on the basis of said delay value and said desired time.

2. The method as claimed in the preceding claim, **characterized in that** the trigger delay value is a value predetermined on the basis of the interval.

3. The method as claimed in claim 2, **characterized in that** it additionally comprises a step of reading, from a database, the trigger delay value.

4. The method as claimed in any one of the preceding claims, **characterized in that** the step of adjusting at least one control parameter of the pulsed light source additionally comprises a step of determining, on the basis of the interval, a bias voltage of the pulsed light source.

5. The method as claimed in the preceding claim, **characterized in that** the bias voltage is a value predetermined on the basis of the interval.

6. The method as claimed in either of claims 4 or 5, **characterized in that** the value of the bias voltage is read from a database.

7. A method for triggering a pulsed light source of a flow cytometer according to any one of the preceding claims, said flow cytometer comprising:
- a first inspection module capable of measuring at least one electrical characteristic;
- a second inspection module, interacting with said pulse light source, for
measuring at least one optical characteristic using the pulsed light source, said method being **characterized in that** it implements the following steps:
- measuring at least one electrical quantity by the first inspection module;
- if the value measured by the first inspection module is higher than or equal to a predetermined threshold value, the pulsed light source of the second inspection module is triggered in accordance with the method of any one of the preceding claims.

8. The method as claimed in the preceding claim, **characterized in that** the triggering of said pulsed light source is controlled in particular on the basis of the time of reception of the detection signal and of a duration, referred to as the flow duration, determined on the basis of:
- a distance between the first inspection module and the second inspection module; and
- a flow rate between said first inspection module and said second inspection module.

9. An electronic device (100) for triggering a pulsed light source, **characterized in that** it comprises means arranged so as to implement all of the steps of the method as claimed in any one of claims 1 to 6.

10. An electronically controlled pulsed light source and comprising a device according to claim 9.

11. The source according to the preceding claim, **characterized in that** it comprises, and in particular consists in, a supercontinuum laser source.

12. A flow cytometer comprising:
- a flow channel (321) suitable for enabling the flow of a fluid including suspended particles (329);
- a first inspection module (320) positioned at a first region (325) of said flow channel (321) and capable of measuring at least one physical characteristic of at least one particle suspended in the fluid flowing through said first region (325);
- a second inspection module (324) positioned at a second region (326) and capable of measuring at least one optical characteristic of at least one particle suspended in the fluid flowing through said second region (326); and
- a pulsed light source for illuminating said second region for the purpose of measuring said at least one optical characteristic,
**characterized in that** it additionally comprises a device as claimed in claim 9 for triggering the pulsed light source.

13. The flow cytometer as claimed in claim 12, **characterized in that** the second inspection module (324) is arranged so as to measure at least the light diffused and/or absorbed and/or emitted by said fluid flowing through said second region (326).
